# EUROPEAN PATENT SPECIFICATION

(11) **EP 3 562 640 B1**
(45) Date of publication and mention of the grant of the patent: **07.10.2020**
(21) Application number: 18700442.9
(22) Date of filing: 01.01.2018
(51) Int. Cl.: B29B 17/02, B07C 5/34, G01N 21/31, G01N 33/44, G01N 21/95, B29B 17/04, B29K 23/00, B29L 7/00, G01N 21/3563

(54) **PROCESS AND SYSTEM FOR RECYCLING POLYOLEFIN WASTE**
VERFAHREN UND SYSTEM ZUM RECYCLING VON POLYOLEFINABFÄLLEN
PROCÉDÉ ET SYSTÈME DE RECYCLAGE DE DÉCHETS DE POLYOLÉFINE

(30) Priority: 30.12.2016 NL 2018102
(43) Date of publication of application: 06.11.2019
(73) Proprietor: Blue Plastics B.V., 6002 XB Weert (NL)
(72) Inventor: FRANSEN, Roel Johannes Henricus Arnoldus, 6001 JH Weert (NL); NOVOSELTSEVA, Tatiana Vladimirovna, 6001 JH Weert (NL)
(74) Representative: Hubregtse, Teunis
(86) International application number: PCT/NL2018/050001
(87) International publication number: WO 2018/124882

(56) References cited:
- EP-A1- 0 521 418
- EP-A2- 0 166 899
- A Moldovan ET AL: "CHARACTERIZATION OF POLYOLEFINS WASTES BY FTIR SPECTROSCOPY", Bulletin of the Transilvania University of Brasov. Engineering Sciences. Series I, 1 July 2012 (2012-07-01), pages 65-2012, XP055377308, Brasov Retrieved from the Internet: URL:http://webbut.unitbv.ro/BU2012/Series I/BULETIN I/Moldovan_A.pdf [retrieved on 2017-05-31]
- B. VAJNA ET AL: "Complex Analysis of Car Shredder Light Fraction", THE OPEN WASTE MANAGEMENT JOURNAL, vol. 3, no. 1, 30 May 2010 (2010-05-30), pages 46-55, XP055377499, ISSN: 1876-4002, DOI: 10.2174/1876400201003010046

## Description

The invention relates to a process for recycling polyolefin waste according to claim 1 and to a system for recycling polyolefin waste according to claim 13.

Polyolefins are polymer molecules made by addition polymerization of alkenes (olefins). Since their commercialization more than 80 years ago, polyolefins are now the major fraction of the plastic materials which have transformed modern life. Polyolefins, such as polyethylene and polypropylene, have introduced new possibilities and benefits for an attractive price. Meanwhile, their annual production still grows exponentially.

A downside of this success is that polyolefin wastes are increasingly spreading through our environment. Their persistence in natural environments in combination with the relative ease of ever producing new polyolefins, has resulted in their ubiquitous presence on the continental areas as well as in the world's large oceans. Life on Earth is increasingly harmed in this way and we are now at a point where this is becoming a problem on a global scale.

One possibility to decrease these negative effects of polyolefins is to recycle them. Therefore, there is a need for efficient and effective recycling processes of polyolefins.

It is a common phenomenon that polyolefins, like many polymeric materials, undergo chemical degradation during their lifetime. A dominant degradation process of polyolefins is oxidation, which introduces oxygen containing groups into the material - by definition, oxygen is in absent in a polyolefin, as it only consists of hydrocarbon chains. The oxidation of a polyolefin leads to a material with inferior properties, such as a lower strength and a higher brittleness. Usually, a higher degree of oxidation of polyolefin is accompanied with a lower quality of the material.

Technology relating to the recycling of plastic waste is described in *e.g.* A. Moldovan et al.: "Characterization of polyolefins wastes by FTIR spectroscopy", Bulletin of the Transilvania University of Brasov, Series I: Engineering Sciences Vol. 5 (54) No. 2 - 2012; B. Vajna et al.: "Complex analysis of car shredder light fraction", The Open Waste Management Journal, 2010, 3, 46-55; EP0166899A2; and EP0521418A1.

The degree of oxidation of polyolefins plays an important factor in their recycling. Depending on the purposed application of a recycled polyolefin, a higher or lower degree of oxidation of the polyolefin may be tolerated. There are, however, no recycling processes for polyolefins wherein source waste material of different grades is recycled into high quality product, especially not without mixing virgin polyolefin into the recycled material to decrease the overall degree of oxidation.

It has now been found however, that an improved polyolefin recycling process can be reached by performing a particular sequence of steps.

Accordingly, the present invention relates to a recycling process for the recycling of polyolefin waste according to claim 1, said process comprising
- providing the polyolefin waste as a plurality of polyolefin pieces; thereafter
- removing contaminants from the polyolefin pieces, wherein the removing comprises washing the pieces with water prior to washing the pieces with an organic solvent; thereafter
- evaporating traces of the organic solvent and water from the washed polyolefin pieces to yield dry pieces; thereafter
- extruding the cleaned and dried polyolefin pieces into a desired form;
wherein the recycling process comprises a sorting procedure that is performed before or after the removing of contaminants, the sorting procedure comprising dividing the plurality of polyolefin pieces into at least two groups of polyolefin pieces, wherein
- the dividing occurs according to the degree of oxidation of the polyolefin pieces
- at least one of the groups of polyolefin pieces undergoes the extruding into a desired form.

For the purpose of the invention, by a contaminant is meant any non-polyolefinic matter.

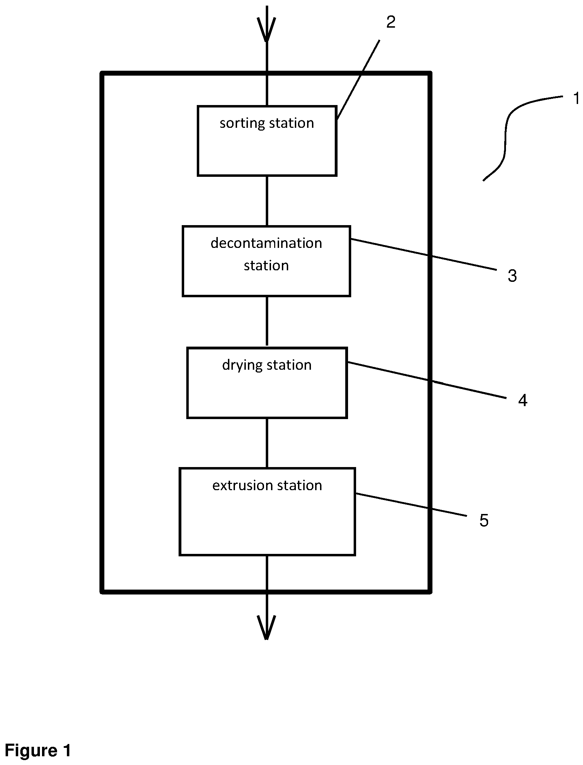

Figure 1 displays a system of the invention wherein the polyolefin waste is recycled.

The polyolefin waste in a process of the invention may in principle comprise any type of polyolefin. It may be a thermoplastic polyolefin or a polyolefin elastomer. It is for example selected from the group of polyethylene (PE), polypropylene (PP), polymethylpentene (PMP), polybutene-1 (PB-1), polyisobutylene (PIB), ethylene propylene rubber (EPR), and ethylene propylene diene monomer (M-class) rubber (EPDM rubber). A polyethylene may be selected from the group of low-density polyethylene (LDPE), linear low-density polyethylene (LLDPE), high-density polyethylene (HDPE) and linear high-density polyethylene (LHDPE).

The polyolefin waste may concern a variety of disposed objects made of polyolefin, such as bottles, boxes, foils, massive blocks or hollow tubes. The polyolefin waste may in particular be agricultural waste, in particular an agricultural foil. In a process of the invention, the polyolefin to be recycled is preferably processed in pieces of a comparable size and shape. This may require the shredding or cutting of polyolefin waste products into pieces with particular dimensions prior to the process of the invention. Another reason for shredding or cutting the polyolefin waste products is that each object may have a substantial variation in the degree of degradation of the polyolefin within the object. For example, some areas may have been subject to more degradation than other areas, possibly as a result of different exposure to sunlight or harmful materials. An example is agricultural foil, taken from agricultural land after its lifetime. Underground areas of the foil, for example, are likely to have undergone less degradation than areas that reside above the ground. Shredding or cutting such objects offers the possibility to separate more degraded polyolefin waste from less degraded polyolefin waste. In this way, the quality of the recycled polyolefin product can be improved.

Thus, in a process of the invention, the providing of the polyolefin waste as a plurality of polyolefin pieces may be preceded by
- providing polyolefin waste as a foil;
- cutting the foil, so that a plurality of polyolefin pieces is obtained.

As mentioned above, the polyolefin pieces to be recycled are preferably processed in pieces of a comparable size and shape. In particular, the two largest dimensions of the polyolefin pieces are, independently of each other, in the range of 5-500 mm, preferably in the range of 10-200 mm. For example, the pieces are sheets with a length that is between 1 and 2 times their width, wherein the length is in the range of 20-500 mm, in particular in the range of 40-250 mm.

An important indicator for the degree of degradation of a polyolefin is its degree of oxidation. Since virgin polyolefin in principle does not contain oxygen in its structure, any oxygen that is found to be present in a polyolefin can in principle be attributed to oxidation of the polyolefin. This makes it for polyolefins relatively easy to determine to which extent it has been degraded as a result of oxidation.

The degree of oxidation is preferably measured by making use of spectroscopic analysis, in particular infrared analysis (IR), such as near-infrared (NIR), mid-infrared (MIR), or far-infrared (FIR) analysis. The obtained spectrum is then compared to that of a virgin polyolefin, preferably of a virgin version of the same polyolefin, more preferably of a virgin version of the same polyolefin production batch. The deviation of the measured spectrum from that of the virgin material is a measure for the degree of oxidation. In methods based on this principle, the quantified outcome is commonly referred to as the "carbonyl index".

The comparison is usually made on the basis of certain specific absorption bands in the IR spectrum of a polyolefin. The carbonyl index can, for example, be determined by dividing the stretching of a carbonyl band area by the area of reference bands such as absorption bands of CH₂-groups. Thus, the carbonyl index may be defined as the ratio between a carbonyl band area and the area of a reference band characteristic of a polyolefin.

In a process of the invention, the degree of oxidation of the different pieces of polyolefin is measured so that they can be sorted accordingly. The sorting is in fact a piece-by-piece screening which then yields two or more groups of polyolefin pieces. Typically, this concerns two groups of polyolefin pieces, wherein the pieces in one group have a higher degree of oxidation than the pieces in the other group.

The sorting may comprise the following sequence of steps, which sequence is typically performed a plurality of times, *i.e.* on each piece that is to be processed:
1) measuring the degree of oxidation (more in particular the carbonyl index) of a piece;
2) comparing the measured degree of oxidation with a predetermined value;
3) according to the outcome of the comparing step 2), either adding the piece to a first group that comprises those pieces that have a degree of oxidation that lies below the predetermined value; or adding the piece to a second group that comprises those pieces that have a degree of oxidation that lies above the predetermined value.

In this sorting procedure, the total range for the degree of oxidation is divided into two sub-ranges by the predetermined value, and either group into which the pieces are sorted corresponds to one of the ranges.

It is of course also possible to separate the pieces into more than two groups, by defining more than two ranges for the degree of oxidation. In this way, use may be made of two or more predetermined values. This allows a more narrow distribution of the degree of oxidation within a group, and therefore a better definition of the recycled product.

Each piece is measured at least once on at least one location on the piece, yielding at least one value for the degree of oxidation of a single piece. In case a plurality of measurements is performed on a single piece (in time and/or location of the measurement), an average of the values may be determined to assign a certain degree of oxidation to the particular piece.

Each of the at least two groups of pieces resulting from the sorting comprises pieces that have an oxidation degree within a particular range. In a process of the invention, a particular group serves as the source material for preparing an amount of recycled polyolefin of a particular quality, while another group that has a different degree of oxidation may be the source of a recycled polyolefin with another quality. Thus, after the sorting procedure, the recycling process continues with at least one of the groups of polyolefin pieces. This means that at least one of the groups undergoes the eventual step of removing contaminants (which only occurs in the case that this step has not already been performed prior to the sorting procedure); and this means that such group will undergo the actual extrusion to yield a recycled product. Optionally, other groups resulting from the sorting may also undergo those steps of the recycling process to yield a recycled product; alternatively, such groups may be disposed (*e.g.* incinerated) because their quality is too low for preparing a recycling product.

With this sorting method, it is prevented that highly oxidized polyolefin is mixed with polyolefin that is less oxidized. Such mixing would not acknowledge the presence of high quality polyolefin in the waste, which would lead to a product of an intermediate quality instead of a higher quality than intermediate quality. Thus, with a process of the invention, a recycled polyolefin can be prepared of which the degree of oxidation - and thus its quality - can be tuned.

The sorting procedure may be performed before the removing of contaminants or thereafter. When it is performed before the removing of contaminants, it is performed after the providing of the polyolefin pieces. When it is performed after the removing of contaminants, it may be performed before or after the drying of the pieces. Preferably, it is then performed after the drying of the pieces. In any case, it is performed before the actual extrusion takes place.

Besides sorting according to the degree of oxidation, an additional sorting step may be present that is directed at separating polyolefin waste from non-polyolefin plastic waste. Since spectroscopic analysis such as IR may discriminate between polyolefins on the one hand and non-polyolefins on the other, it is possible to use a mixture of these two sorts of plastic as the source material for the process. When they are also provided as a plurality of pieces, they may be sorted piece-by-piece according to their nature (polyolefin or non-polyolefin), so that the non-polyolefin material is collected and selectively proceeds in the recycling process. Such materials can then be further processed in other (recycling) processes than the one of the invention. This additional sorting step may be performed before or after the removing of contaminants.

The piece-by-piece screening also allows to make a separation of different kinds of polyolefins within the polyolefin waste material. For example, to separate polyethylene from polypropylene, or possibly also LDPE from HDPE or LDPE from LLDPE. Thus, a process of the invention may comprise an additional sorting procedure wherein the polyolefin pieces are sorted according to the type of polyolefin, the sorting yielding at least two groups of polyolefin pieces (each group typically consisting of a different type of polyolefin). This sorting procedure may be performed before or after the removing of contaminants.

A process of the invention may also comprise an additional sorting procedure wherein the polyolefin pieces are sorted according to their color. This sorting procedure may be performed before or after the removing of contaminants.

In a process of the invention, the pieces of polyolefin waste are cleaned before they are extruded to form the recycled material. In this cleaning step, contaminants are removed from the polyolefin waste, so that they do not end up in the recycled material. The cleaning is important, because the inclusion of non-polyolefinic materials into the recycled product results in poorer material properties such as its strength, transparency, elasticity and durability.

The cleaning comprises a washing step with an aqueous solvent, followed by a washing step with an organic solvent. After the treatment with the organic solvent, the polyolefin pieces are dried, *i.e.* traces of the water and the organic solvent are removed by evaporation.

By an aqueous solvent is in particular meant a water-containing solvent, wherein the water content is 50 wt% or more, 75 wt% or more, 90 wt% or more, 95 wt% or more, 98 wt% or more or essentially pure water (essentially 100 wt.%). The aqueous solvent may contain a detergent and/or one or more other additives that aid in the removal of contaminants from the polyolefin pieces.

The organic solvent may in principle be any solvent that is compatible with polyolefins and in which polyolefins do not substantially dissolve. For example, the organic solvent is selected from the group of esters, ethers, aldehydes, ketones, alcohols and hydrocarbons. Preferably, the organic solvent is an ester of a carboxylic acid, such as a C1-C4 alkanoic acid. More preferably, the organic solvent is ethyl acetate. The organic solvent may also be a solvent selected from the group of acetone, methanol, ethanol, propanol and diethylether.

In case the polyolefin waste comprises agricultural foil, it was found that the procedure for removing contaminants is particularly effective to remove inorganic contaminants as well as organic contaminants that are the result of use in agriculture, such as soil, fertilizers, animal faeces, plant material and pesticides.

In a process of the invention, the sorting procedure may be performed before the removing of contaminants, wherein the removing comprises a washing step with water prior to a washing step with an organic solvent. Such process may therefore also be described as a recycling process for recycling polyolefin waste, comprising the steps of
- providing the polyolefin waste as a plurality of polyolefin pieces; then
- sorting the polyolefin pieces according to their degree of oxidation, the sorting yielding at least two groups of polyolefin pieces; then
- removing contaminants from the polyolefin pieces of at least one group of polyolefin pieces, wherein the removing comprises a washing step with water, optionally in the presence of a detergent, prior to a washing step with an organic solvent; then
- removing traces of the organic solvent and water from the polyolefin pieces of the at least one group by evaporation to yield dry polyolefin pieces; then
- extruding the resulting cleaned and dried polyolefin pieces into a desired form.

The advantage of performing the sorting procedure before the removing of contaminants (rather than thereafter) by means of water and organic solvent is that non-polyolefin material or non-recyclable polyolefin material can be expelled early in the recycling process, without spending efforts and materials (such as organic solvent, water, detergent) on washing them, on drying them and on transporting them to a device where the washing takes place. It is emphasized that the washing procedure in a process of the invention is quite intensive because small amounts of contaminants that are locked in during extrusion already may strongly impair the properties of the recycled material. It is therefore a spill of energy, time and washing liquids when thoroughly cleaned polyolefin pieces are rejected from the recycling process just prior to the final extrusion.

It is still possible, however, that before the sorting step, dirt needs to be removed from the pieces by "dry methods" in order to achieve a reliable measurement of the degree of oxidation. Such methods are methods that do not make use of a washing procedures and a washing liquid, in particular these are methods wherein the sorting procedure is preceded by a cleaning step which does not make use of washing with a liquid. This may be accomplished by inducing physical agitation and/or deformation of the flakes, for example by shaking them, subjecting them to vibrations of the support on which they lie, squeezing them, or tumbling them in a container by airflow. They may also be brushed or scraped. Solid contaminants that have come loose by such methods can be separated from the pieces by sieving. This is in particular helpful when the polyolefin contains encrusted dirt such as plaques of soil or plant material. Thus, possibly there is a rough cleaning step preceding the measuring step, but this is preferably only be applied in case the presence of heavy dirt such as large plaques of dried mud or animal faeces prevents a reliable measurement of the degree of oxidation of the polyolefin pieces.

It was unexpectedly found that with many batches of polyolefin waste, in particular agricultural waste, a reliable measurement of the degree of oxidation of the pieces is still possible, despite the fact that the pieces had not been subjected to a washing step which makes use of washing with a liquid, such as the washing step with water prior to a washing step with an organic solvent. Especially when a plurality of measurements was performed on multiple locations on a single piece, a reliable measurement of the degree of oxidation could be made. In those cases where encrusted dirt on the pieces still hampered the measurements, the application of a dry cleaning method prior to the measurement substantially increased the success of the measurements. Those pieces for which no sensible measurement of the degree of oxidation can be made, can be rejected.

Material that is rejected during such process (because, for example, it is degraded (oxidized) to an unacceptable extent), has not yet been washed. This is an advantage, because, since the rejected polyolefin is not recycled, a cleaning is not necessary after all. It is for example incinerated, for which the presence of dirt is not important, or at least not as important as for recycling the polyolefin.

It is of course also possible to perform the sorting after the cleaning has been performed. This does not offer all of the advantages as mentioned above, in particular not the advantage that it is possible to expel non-polyolefin material or non-recyclable polyolefin material early in the recycling process without spending efforts and materials on washing and drying. Yet, such method is still advantageous in that a piece-by-piece screening allows to tune the degree of oxidation - and thus the quality - of a recycled polyolefin.

By washing is usually meant that the pieces are contacted with the respective washing liquid (*viz.* water and the organic solvent), after which the washing liquid is separated from the pieces in its liquid state, for example by filtration or decanting, possibly aided by centrifugation. After such separation, a certain amount of washing liquid still remains on the surface of the pieces and/or between the pieces. The pieces are then referred to as wet pieces. In a process of the invention, such remaining traces of washing liquid are removed by evaporating them, yielding dry pieces. In a process of the invention, the evaporation may occur at atmospheric pressure but also under a reduced pressure.

During the washing, a detergent may be used to achieve a better cleaning of the polyolefin pieces.

In a process of the invention, traces of water that remain at and between the pieces after the washing with water, do not have to be removed prior to the washing step with organic solvent. These traces can be evaporated concurrently with the evaporation of the organic solvent, possibly under a reduced pressure, once the washing step with organic solvent has been performed.

In a process of the invention, the extruding is preferably performed on each group of pieces separately, so that the products obtained after the extruding are of different grades that correspond to that of the groups in which the pieces are sorted. If desired, virgin polyolefin may be added prior to the extrusion in different proportions to improve the quality of the end-product (in particular by reducing its degree of oxidation).

Additives that may be added to the polyolefin prior to the extrusion are selected from the group anti-oxidants, stabilizers, antistatic agents, blowing agents, lubricants, pigments and plasticizers. Typically, measurements on the recycled material are performed per batch, so that a better formulation of the additives can be determined, which is then applied in the next batch.

By the term "thereafter" in a recycling process of the invention is meant that the actions (for example removing, evaporating, extruding) that are indicated after the respective term "thereafter", occur after that respective term, allowing the possibility that other actions may be performed in between the two actions.

The invention further relates to a system (1) for recycling polyolefin waste according to claim 13, said system comprising
- a sorting station (2) capable of
   1) receiving the polyolefin waste as a plurality of polyolefin pieces; and
   2) sorting the polyolefin pieces according to their degree of oxidation;
- a decontamination station (3) which is capable of
   1) receiving polyolefin pieces from the sorting station (2), which pieces have been sorted by the sorting station (2); and
   2) removing contaminants from the polyolefin pieces by making use of water and an organic solvent as washing liquids;
- a drying station (4) which is capable of
   1) receiving polyolefin pieces from the decontamination station (3), which pieces have been decontaminated by the decontamination station (3); and
   2) removing traces of water and organic solvent from the polyolefin pieces;
- an extrusion station (5) which is capable of
   1) receiving polyolefin pieces from the drying station (4), which pieces have been dried by the drying station (4); and
   2) extruding the polyolefin pieces into a desired form.

Such system is demonstrated in Figure 1, displaying the sorting station (2) where the plurality of polyolefin pieces enters the system (1), the decontamination station (3), the drying station (4) and the extrusion station (5) where the recycled polyolefin leaves the system (1).

In a system of the invention, the sorting station (2) typically comprises at least two outlets for the sorted species, at least one of the outlets being capable of providing the polyolefin pieces to the washing station (3).

The invention also relates to a system (1) for recycling polyolefin waste, comprising
- a decontamination station (3) which is capable of
   1) receiving the polyolefin waste as a plurality of polyolefin pieces; and
   2) removing contaminants from the polyolefin pieces by making use of water and an organic solvent as washing liquids;
- a drying station (4) which is capable of
   1) receiving polyolefin pieces from the decontamination station (3), which pieces have been decontaminated by the decontamination station (3); and
   2) removing traces of water and organic solvent from the polyolefin pieces;
- a sorting station (2) capable of
   1) receiving polyolefin pieces from the drying station (4), which pieces have been dried by the drying station (4); and
   2) sorting the polyolefin pieces according to their degree of oxidation;
- an extrusion station (5) which is capable of
   1) receiving polyolefin pieces from the sorting station (2), which pieces have been sorted by the sorting station (2); and
   2) extruding the polyolefin pieces into a desired form.

In a system of the invention, the sorting station (2) typically comprises at least two outlets for the sorted species, at least one of the outlets being capable of providing the polyolefin pieces to the next station, which is typically the extrusion station (5).

A system of the invention may further comprise a cutting or shredding station, which station is capable of cutting polyolefin objects, such as polyolefin foil, into smaller pieces. By smaller pieces is meant that the pieces are smaller than the original foil prior to the cutting.

## Claims

1. A recycling process for the recycling of polyolefin waste, comprising
- providing the polyolefin waste as a plurality of polyolefin pieces; thereafter
- removing contaminants from the polyolefin pieces, wherein the removing comprises washing the pieces with water prior to washing the pieces with an organic solvent; thereafter
- evaporating traces of the organic solvent and water from the washed polyolefin pieces to yield dry polyolefin pieces; thereafter
- extruding the resulting cleaned and dried polyolefin pieces into a desired form;
wherein the recycling process comprises a sorting procedure that is performed before or after the removing of contaminants, the sorting procedure comprising dividing the plurality of polyolefin pieces into at least two groups of polyolefin pieces, wherein
- the dividing occurs according to the degree of oxidation of the polyolefin pieces;
- at least one of the groups of polyolefin pieces undergoes the extruding into a desired form.

2. A recycling process according to claim 1, wherein the sorting procedure is performed before the removing of contaminants from the polyolefin pieces.

3. A recycling process according to claim 1 or 2, wherein the providing of the polyolefin waste as a plurality of polyolefin pieces is preceded by
- providing polyolefin waste, which polyolefin waste is a foil;
- cutting the foil, so that a plurality of polyolefin pieces is obtained.

4. A recycling process according to any of the preceding claims, wherein the sorting procedure is preceded by a cleaning step which does not make use of washing with a liquid.

5. A recycling process according to any of the preceding claims, wherein the polyolefin waste is agricultural waste, in particular an agricultural foil.

6. A recycling process according to any of the preceding claims, wherein the two largest dimensions of the polyolefin pieces are, independently of each other, in the range of 5-500 mm, preferably in the range of 10-200 mm.

7. A recycling process according to any of the preceding claims, wherein the sorting procedure comprises
1) measuring the degree of oxidation (more in particular the carbonyl index) of a piece;
2) comparing the measured degree of oxidation with a predetermined value;
3) according to the outcome of the comparing step 2), either adding the piece to a first group that comprises those pieces that have a degree of oxidation that lies below the predetermined value; or adding the piece to a second group that comprises those pieces that have a degree of oxidation that lies above the predetermined value.

8. A recycling process according to any of the preceding claims, wherein the degree of oxidation is measured by spectroscopic analysis, in particular infrared analysis such as NIR, FTIR and MIR.

9. A recycling process according to claim 8, wherein the degree of oxidation of the polyolefin pieces is determined by measuring their carbonyl index, wherein the carbonyl index is the ratio between a carbonyl band area and the area of a reference band characteristic of a polyolefin.

10. A recycling process according to any of the preceding claims, comprising an additional sorting procedure wherein the polyolefin pieces are sorted according to the type of polyolefin.

11. A recycling process according to any of the preceding claims, comprising an additional sorting procedure wherein the polyolefin pieces are sorted according to their color.

12. A recycling process according to any of the preceding claims, wherein the evaporation occurs under a reduced pressure.

13. A system (1) for recycling polyolefin waste, comprising
- a sorting station (2) capable of
1) receiving the polyolefin waste as a plurality of polyolefin pieces; and
2) sorting the polyolefin pieces according to their degree of oxidation;
- a decontamination station (3) which is capable of
1) receiving polyolefin pieces from the sorting station (2), which pieces have been sorted by the sorting station (2); and
2) removing contaminants from the polyolefin pieces by making use of water and an organic solvent as washing liquids;
- a drying station (4) which is capable of
1) receiving polyolefin pieces from the decontamination station (3), which pieces have been decontaminated by the decontamination station (3); and
2) removing traces of water and organic solvent from the polyolefin pieces;
- an extrusion station (5) which is capable of
1) receiving polyolefin pieces from the drying station (4), which pieces have been dried by the drying station (4); and
2) extruding the polyolefin pieces into a desired form.

14. A system according to claim 13, comprising a cutting or shredding station capable of cutting polyolefin foil into a plurality of pieces.

## Patentansprüche

1. Recyclingverfahren zum Wiederverwerten von Polyolefinabfällen, Folgendes umfassend:
- Bereitstellen der Polyolefinabfälle als mehrere Polyolefinstücke; danach
- Entfernen von Verunreinigungen aus den Polyolefinstücken, wobei das Entfernen das Waschen der Stücke mit Wasser vor dem Waschen der Stücke mit einem organischen Lösungsmittel umfasst; danach
- Verdampfen von Spuren des organischen Lösungsmittels und Wasser aus den gewaschenen Polyolefinstücken, um trockene Polyolefinstücke zu erhalten; danach
- Extrudieren der resultierenden gereinigten und getrockneten Polyolefinstücke in eine gewünschte Form;
wobei das Recyclingverfahren ein Sortierverfahren umfasst, das vor oder nach dem Entfernen von Verunreinigungen durchgeführt wird, wobei das Sortierverfahren das Aufteilen der mehreren Polyolefinstücke in mindestens zwei Gruppen von Polyolefinstücken umfasst, wobei
- das Aufteilen entsprechend dem Oxidationsgrad der Polyolefinstücke erfolgt;
- mindestens eine der Gruppen von Polyolefinstücken in eine gewünschte Form extrudiert wird.

2. Recyclingverfahren nach Anspruch 1, wobei das Sortierverfahren vor dem Entfernen von Verunreinigungen aus den Polyolefinstücken durchgeführt wird.

3. Recyclingverfahren nach Anspruch 1 oder 2, wobei vor dem Bereitstellen des Polyolefinabfalls als mehrere Polyolefinstücke Folgendes durchgeführt wird:
- Bereitstellen von Polyolefinabfällen, wobei die Polyolefinabfälle eine Folie sind;
- Schneiden der Folie, so dass mehrere Polyolefinstücke erhalten werden.

4. Recyclingverfahren nach einem der vorhergehenden Ansprüche, wobei dem Sortierverfahren ein Reinigungsschritt vorausgeht, bei dem kein Waschen mit einer Flüssigkeit verwendet wird.

5. Recyclingverfahren nach einem der vorhergehenden Ansprüche, wobei der Polyolefinabfall landwirtschaftlicher Abfall ist, insbesondere eine landwirtschaftliche Folie.

6. Recyclingverfahren nach einem der vorhergehenden Ansprüche, wobei die beiden größten Abmessungen der Polyolefinstücke unabhängig voneinander im Bereich von 5-500mm, vorzugsweise im Bereich von 10-200 mm, liegen.

7. Recyclingverfahren nach einem der vorhergehenden Ansprüche, wobei das Sortierverfahren Folgendes umfasst:
1) Messen des Oxidationsgrades (insbesondere des Carbonyl-Index) eines Stücks;
2) Vergleich des gemessenen Oxidationsgrades mit einem vorbestimmten Wert;
3) entsprechend dem Ergebnis des Vergleichsschrittes 2) entweder Hinzufügen des Stücks zu einer ersten Gruppe, die diejenigen Stücke umfasst, die einen Oxidationsgrad aufweisen, der unter dem vorbestimmten Wert liegt; oder Hinzufügen des Stücks zu einer zweiten Gruppe, die diejenigen Stücke umfasst, die einen Oxidationsgrad aufweisen, der über dem vorbestimmten Wert liegt.

8. Recyclingverfahren nach einem der vorhergehenden Ansprüche, wobei der Oxidationsgrad durch spektroskopische Analyse, insbesondere Infrarotanalyse wie NIR, FTIR und MIR, gemessen wird.

9. Recyclingverfahren nach Anspruch 8, wobei der Oxidationsgrad der Polyolefinstücke durch Messung ihres Carbonylindex bestimmt wird, wobei der Carbonylindex das Verhältnis zwischen der Fläche einer Carbonylbande und der Fläche einer für ein Polyolefin charakteristischen Referenzbande ist.

10. Recyclingverfahren nach einem der vorhergehenden Ansprüche, umfassend ein zusätzliches Sortierverfahren, wobei die Polyolefinstücke nach dem Typ des Polyolefins sortiert werden.

11. Recyclingverfahren nach einem der vorhergehenden Ansprüche, umfassend ein zusätzliches Sortierverfahren, wobei die Polyolefinstücke nach ihrer Farbe sortiert werden.

12. Recyclingverfahren nach einem der vorhergehenden Ansprüche, wobei die Verdampfung unter einem reduzierten Druck erfolgt.

13. System (1) zum Wiederverwerten von Polyolefinabfällen, umfassend:
- eine Sortierstation (2), die zu Folgendem in der Lage ist:
1) Empfangen der Polyolefinabfälle als mehrere Polyolefinstücke; und
2) Sortieren der Polyolefinstücke nach ihrem Oxidationsgrad;
- eine Dekontaminationsstation (3), die zu Folgendem in der Lage ist:
1) Empfangen von Polyolefinstücken von der Sortierstation (2), die von der Sortierstation (2) sortiert wurden; und
2) Entfernen von Verunreinigungen aus den Polyolefinstücken unter Verwendung von Wasser und einem organischen Lösungsmittel als Waschflüssigkeiten;
- eine Trocknungsstation (4), die zu Folgendem in der Lage ist:
1) Empfangen von Polyolefinstücken von der Dekontaminationsstation (3), die von der Dekontaminationsstation (3) dekontaminiert wurden; und
2) Entfernen von Spuren von Wasser und organischen Lösungsmitteln aus den Polyolefinstücken;
- eine Extrusionsstation (5), die zu Folgendem in der Lage ist:
1) Empfangen von Polyolefinstücken von der Trocknungsstation (4), die durch die Trocknungsstation (4) getrocknet wurden; und
2) Extrudieren der Polyolefinstücke in eine gewünschte Form.

14. System nach Anspruch 13, umfassend eine Schneide- oder Zerkleinerungsstation, die in der Lage ist, Polyolefinfolie in mehrere Stücke zu schneiden.

## Revendications

1. Procédé de recyclage pour le recyclage de déchets de polyoléfines, comprenant
- la fourniture des déchets de polyoléfines sous la forme d'une pluralité de morceaux de polyoléfines ; puis
- l'élimination des contaminants des morceaux de polyoléfines, dans lequel l'élimination comprend le lavage des morceaux au moyen d'eau avant de laver les morceaux au moyen d'un solvant organique ; puis
- l'évaporation des traces du solvant organique et de l'eau des morceaux de polyoléfines lavés pour donner des morceaux de polyoléfines secs ; puis
- l'extrusion des morceaux de polyoléfines nettoyés et séchés résultants en une forme souhaitée ;
dans lequel le processus de recyclage comprend une procédure de tri qui est effectuée avant ou après l'élimination des contaminants, la procédure de tri comprenant la division de la pluralité de morceaux de polyoléfines en au moins deux groupes de morceaux de polyoléfines, dans lequel
- la division s'effectue selon le degré d'oxydation des morceaux de polyoléfines ;
- au moins l'un des groupes de morceaux de polyoléfines subit l'extrusion en une forme souhaitée.

2. Procédé de recyclage selon la revendication 1, dans lequel la procédure de tri est effectuée avant l'élimination des contaminants des morceaux de polyoléfines.

3. Procédé de recyclage selon la revendication 1 ou 2, dans lequel la fourniture des déchets de polyoléfines sous forme d'une pluralité de morceaux de polyoléfines est précédée par
- la fourniture de déchets de polyoléfines, lesquels déchets de polyoléfines sont une feuille ;
- la découpe de la feuille, de manière à obtenir une pluralité de morceaux de polyoléfines.

4. Procédé de recyclage selon l'une quelconque des revendications précédentes, dans lequel la procédure de tri est précédée d'une étape de nettoyage qui n'utilise pas de lavage au moyen d'un liquide.

5. Procédé de recyclage selon l'une quelconque des revendications précédentes, dans lequel les déchets de polyoléfines sont des déchets agricoles, en particulier une feuille agricole.

6. Procédé de recyclage selon l'une quelconque des revendications précédentes, dans lequel les deux plus grandes dimensions des morceaux de polyoléfines sont, indépendamment l'une de l'autre, dans la plage de 5 à 500 mm, de préférence dans la plage de 10 à 200 mm.

7. Procédé de recyclage selon l'une quelconque des revendications précédentes, dans lequel la procédure de tri comprend
1) la mesure du degré d'oxydation (plus particulièrement l'indice de carbonyle) d'un morceau ;
2) la comparaison du degré d'oxydation mesuré à une valeur prédéterminée ;
3) selon le résultat de l'étape de comparaison 2), soit l'ajout du morceau à un premier groupe comprenant les morceaux qui présentent un degré d'oxydation inférieur à la valeur prédéterminée ; soit l'ajout du morceau à un second groupe qui comprend les morceaux qui présentent un degré d'oxydation qui se situe au-dessus de la valeur prédéterminée.

8. Procédé de recyclage selon l'une quelconque des revendications précédentes, dans lequel le degré d'oxydation est mesuré par analyse spectroscopique, en particulier par analyse infrarouge telle que NIR, FTIR et MIR.

9. Procédé de recyclage selon la revendication 8, dans lequel le degré d'oxydation des morceaux de polyoléfines est déterminé en mesurant leur indice de carbonyle, dans lequel l'indice de carbonyle est le rapport entre une aire de bande de carbonyle et l'aire d'une bande de référence caractéristique d'une polyoléfine.

10. Procédé de recyclage selon l'une quelconque des revendications précédentes, comprenant une procédure de tri supplémentaire, dans lequel les morceaux de polyoléfines sont triés selon le type de polyoléfine.

11. Procédé de recyclage selon l'une quelconque des revendications précédentes, comprenant une procédure de tri supplémentaire, dans lequel les morceaux de polyoléfines sont triés selon leur couleur.

12. Procédé de recyclage selon l'une quelconque des revendications précédentes, dans lequel l'évaporation se produit sous une pression réduite.

13. Système (1) de recyclage de déchets de polyoléfines, comprenant
- une station de tri (2) capable
1) de recevoir les déchets de polyoléfines sous forme d'une pluralité de morceaux de polyoléfines ; et
2) de trier les morceaux de polyoléfines selon leur degré d'oxydation ;
- une station de décontamination (3) capable
1) de recevoir des morceaux de polyoléfines de la station de tri (2), lesquels morceaux ont été triés par le poste de tri (2) ; et
2) d'éliminer les contaminants des morceaux de polyoléfines en utilisant de l'eau et un solvant organique comme liquides de lavage ;
- une station de séchage (4) capable
1) de recevoir des morceaux de polyoléfines du poste de décontamination (3), lesquels morceaux ayant été décontaminés par la station de décontamination (3) ; et
2) d'éliminer les traces d'eau et de solvant organique des morceaux de polyoléfines ;
- une station d'extrusion (5) capable
1) de recevoir des morceaux de polyoléfines de la station de séchage (4), lesquels morceaux ont été séchés par la station de séchage (4) ; et
2) d'extruder les morceaux de polyoléfines sous une forme souhaitée.

14. Système selon la revendication 13, comprenant une station de découpe ou de déchiquetage capable de découper une feuille de polyoléfines en une pluralité de morceaux.
